# EUROPÄISCHE PATENTSCHRIFT

(11) **EP 2 362 099 B1**
(45) Veröffentlichungstag und Bekanntmachung des Hinweises auf die Patenterteilung: **05.06.2013**
(21) Anmeldenummer: 10160291.0
(22) Anmeldetag: 19.04.2010
(51) Int. Cl.: F04B 39/10, F04B 53/10, F04B 5/02, F16K 15/08

(54) **Selbsttätiges konzentrisches, kurbelseitiges Kompressorventil**
Self-actuated concentric, crank-side compressor valve
Soupape de compresseur automatique et concentrique, placée du côté de la manivelle

(30) Priorität: 23.04.2009 AT 6232009
(43) Veröffentlichungstag der Anmeldung: 31.08.2011
(73) Patentinhaber: Hoerbiger Kompressortechnik Holding GmbH, 1220 Wien (AT)
(72) Erfinder: Fuxa, Uwe, 1110 Wien (AT); Machu, Gunther, 1230 Wien (AT); Testori, Markus, 2020 Hollabrunn (AT)
(74) Vertreter: Weiss, Christian

(56) Entgegenhaltungen:
- AT-B- 239 425
- DE-A1- 1 503 422
- DE-A1- 3 635 221
- US-A- 4 360 319

## Beschreibung

Die gegenständliche Anmeldung betrifft ein selbsttätiges Kompressorventil mit einem Saugventil und einem Druckventil, die konzentrisch zueinander angeordnet sind, wobei das Saugventil und das Druckventil radial nebeneinander angeordnet sind und das Saugventil und das Druckventil aus einer ersten und einer zweiten Ventilscheibe gebildet ist, zwischen denen für das Saugventil und das Druckventil jeweils ein Dichtelement beweglich angeordnet ist und einer Anwendung des Kompressorventils in einem Kompressor.

Bei Kolbenkompressoren ist es bekannt, zylinderkopfseitig ein konzentrisches, in einer Ebene angeordnetes Saug- und Druckventil vorzusehen. Eine solche Anordnung geht z.B. aus der DE 1 503 422 A hervor. Da keine separaten Saug- und Druckventile benötigte werden, die als Einzelteile erheblich mehr Bauraum benötigen, kann der Schadraum auf der Zylinderkopfseite weitgehend minimiert werden.

Bei doppelt wirkenden Kolbenkompressoren, müssen auch kurbelgehäuseseitig Saug- und Druckventile vorgesehen sein. Da auf der Kurbelgehäuseseite aber natürlich auch die hin-und hergehende Kolbenstange durchgeführt sein muss, ist die Anordnung von Saug- und Druckventilen, insbesondere bei einem erwünschten kleinen Schadraum, aber ungleich aufwendiger und schwieriger.

Aus der US 4,360,319 A geht eine kurbelseitige Ventilanordnung hervor, bei der das Saugventil und das Druckventil radial nebeneinander um eine zentral durchgehende Kolbenstange, die durch eine Abdichtung zum Kurbelkasten abgedichtet ist, angeordnet sind. Die Saug-und Druckventile könnten natürlich an der Zylinderwand angeordnet werden, was aber mit einem größeren Schadraum einhergeht.

Alternativ könnte aber auch kurbelgehäuseseitig ein konzentrisches Saug- und Druckventil angeordnet sein, wie z.B. aus der GB 249 763 B bekannt. Bei diesem Ventil sind das Saugventil und das Druckventil axial hintereinander angeordnet, was einerseits eine große Baulänge der Ventile und auch des Zylinders selbst bedingt und andererseits zu einem großen Schadraum führt. Diese Anordnung führt aber auch dazu, dass der Zylinder durch notwendige Strömungskanäle aufwendig und kompliziert wird. Das kurbelseitige Druckventil umgibt auch eine Abdichtung zur Kolbenstange hin, die hier vom heißen komprimierten Druckmedium umspült wird. Die Abdichtung wird hier also neben der auftretenden Reibungswärme durch das Druckmedium ungünstiger Weise noch zusätzlich aufgeheizt. Außerdem erfordert diese Anordnung einen sehr komplexen und daher aufwendigen Ventil- und Zylinderaufbau.

Es ist daher eine Aufgabe der gegenständlichen Erfindung, ein kurbelseitig anzuordnendes, selbsttätiges Saug- und Druckventil anzugeben, das einen kurbelseitigen Einbau in einen Zylinder mit möglichst geringem Schadraum ermöglicht und das einfach und kompakt aufgebaut ist.

Diese Aufgabe wird erfindungsgemäß dadurch gelöst, dass in der ersten und zweiten Ventilscheibe eine axial durchgehende Ausnehmung vorgesehen ist und eine Abdichtung aus einer Anzahl von axial hintereinander angeordneten Druckpackungen axial an der zweiten Ventilscheibe anliegend angeordnet ist. Durch die Ausnehmung wird im betriebsgemäßen Einsatz die Kolbenstange durchgeführt, wobei der dabei entstehende Umfangsspalt zwischen Kolbenstange und Ausnehmung unerwünschten Schadraum darstellt. Da der Abstand zwischen Ausnehmung und Kolbenstange nicht beliebige reduziert werden kann, insbesondere da die Kolbenstange auch Bewegungen quer zur Hubbewegung unterworfen ist, wird der Umfangspalt (und damit der Schadraum) dadurch reduziert, indem die axiale Länge des Umfangsspaltes durch die axial an der zweiten Ventilscheibe anschließenden Anordnung der Abdichtung (die den Umfangsspalt in axialer Richtung begrenzt) verkleinert wird. Durch dieses Design eines Saug- und Druckventils mit direkt angeschlossener Abdichtung kann der Schadraum entsprechend reduziert werden.

Die axiale Länge des Umfangsspaltes und damit das Volumen des Schadraumes kann weitere reduziert werden, wenn zumindest eine Druckpackung in der zweiten Ventilscheibe angeordnet ist.

Besonders vorteilhaft ist es, wenn das Saugventil radial innen angeordnet ist und ein Zuführraum zur Zuführung von Druckmedium zum Saugventil radial innen durch die Abdichtung begrenzt wird. In diesem Fall wird die Abdichtung vom kalten zugeführten Druckmedium umspült und dabei gleichzeitig gekühlt. Dadurch kann die Lebensdauer der Abdichtung erhöht werden bzw. unterliegt die Abdichtung geringeren thermischen Anforderungen und kann daher einfache rund günstiger (z.B. hinsichtlich der verwendeten Materialen) ausgeführt sein.

Die gegenständliche Erfindung wird nachfolgend anhand der schematischen, beispielhaften, nicht einschränkenden und vorteilhafte Ausgestaltungen zeigenden Figuren 1 bis 3 beschrieben. Dabei zeigt
Fig. 1 eine perspektivische Ansicht eines Schnitts durch ein erfindungsgemäßes Kompressorventil und
Fig. 2 und 3 eine Ansicht der Verwendung eines erfindungsgemäßen Ventils in einem Zylinder eines Kompressors.

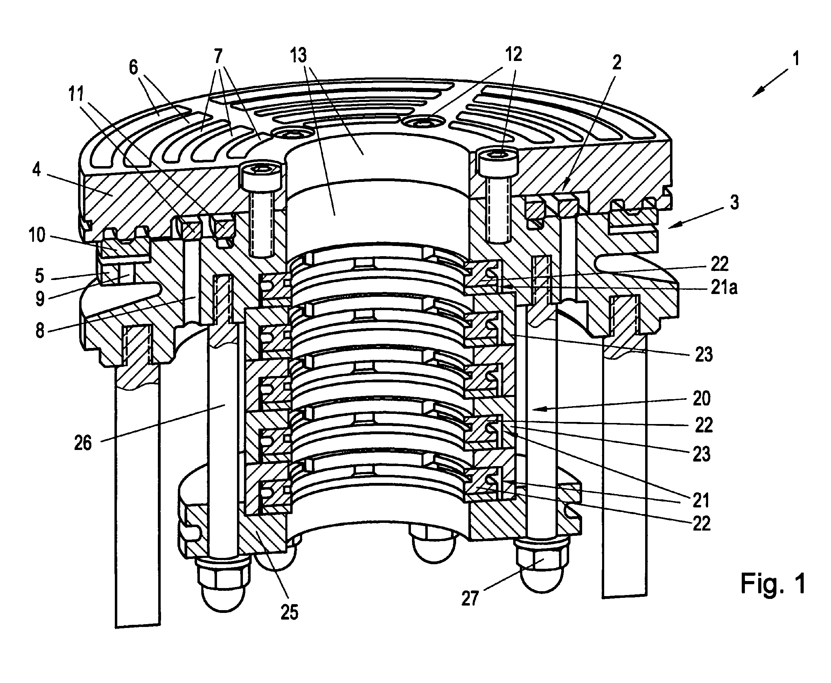

In Fig. 1 ist ein erfinderisches Kompressorventil 1 mit einem Saugventil 2 und Druckventil 3, die konzentrisch zueinander angeordnet ist und einer Abdichtung 20 dargestellt. Das Saugventil 2 und Druckventil 3 wird gebildet aus einer ersten, dem Zylinderraum Z zugewandten Ventilscheibe 4 und einer zweiten, dem Kurbelgehäuseraum K zugewandten Ventilscheibe 5, die axial aneinander liegend angeordnet sind. Die Ventilscheiben 4, 5 sind hier durch über den Umfang verteilt angeordnete Schrauben 12 miteinander verbunden, können aber natürlich auch durch eine andere geeignete Verbindung verbunden sein. Für das Druckventil 3 ist die erste Ventilscheibe 4 Ventilsitz und die zweite Ventilscheibe 5 Ventilfänger. Für das Saugventil 3 ist die Anordnung umgekehrt, also die erste Ventilscheibe 4 Ventilfänger und die zweite Ventilscheibe 5 Ventilsitz. Im gezeigten Beispiel ist das Druckventil 3 radial außen und das Saugventil 2 radial innen angeordnet (was aber auch umgekehrt sein kann) und das Saugventil 2 und das Druckventil 3 sind somit nicht axial nebeneinander, sondern im Wesentlichen in einer Ebene bzw. radial nebeneinander angeordnet. In den Ventilscheiben 4, 5 sind in an sich bekannter Weise eine Vielzahl von Durchströmkanäle 6, 7, 8, 9 angeordnet, um Druckmedium zuzuführen bzw. abzuführen. Zwischen der ersten und zweiten Ventilscheibe 4, 5 (bzw. zwischen dem jeweiligen Ventilsitz und Ventilfänger) ist für das Saugventil 2 und das Druckventil 3 jeweils ein in axialer Richtung beweglich angeordnetes Dichtelement 11, 10 vorgesehen. Ein Dichtelement 10, 11 kann auch in bekannter Weise durch Federelemente, wie z.B. Spiralfedern, die im jeweiligen Ventilfänger angeordnet sind, oder durch Federplatten zwischen Ventilfänger und Dichtelement gegen den jeweiligen Ventilsitz gedrückt werden.

Die Dichtelemente 10, 11 sind hier als Dichtplatten ausgeführt, die in an sich bekannter Weise eine Vielzahl von Durchströmkanäle aufweisen. Die Dichtelemente 10, 11 sind hier jeweils radial innen an einer axialen Stufe der zweiten Ventilscheibe 5 geführt. Alternativ kann ein Dichtelement 10, 11 aber auch in Form von einzelnen konzentrischen Dichtringen ausgeführt sein. Ebenso kann die radiale und axiale Führung der Dichtelemente 10, 11 anders gestaltet sein, z.B. durch Führungsnasen am Ventilsitz.

Die Dichtelemente 10, 11 können eine ebene (also eine in einer Normalebene zur Achse des Kompressorventils 1 liegende) Dichtfläche aufweisen. Die Dichtelemente 10, 11 können aber auch profilierte Dichtflächen haben, wie z.B. abgeschrägte Kanten, torisch ausgebildete Dichtflächen oder andere beliebig geformte Dichtflächen. Die zugeordneten Dichtflächen am jeweiligen Ventilsitz sind dabei gegengleich geformt.

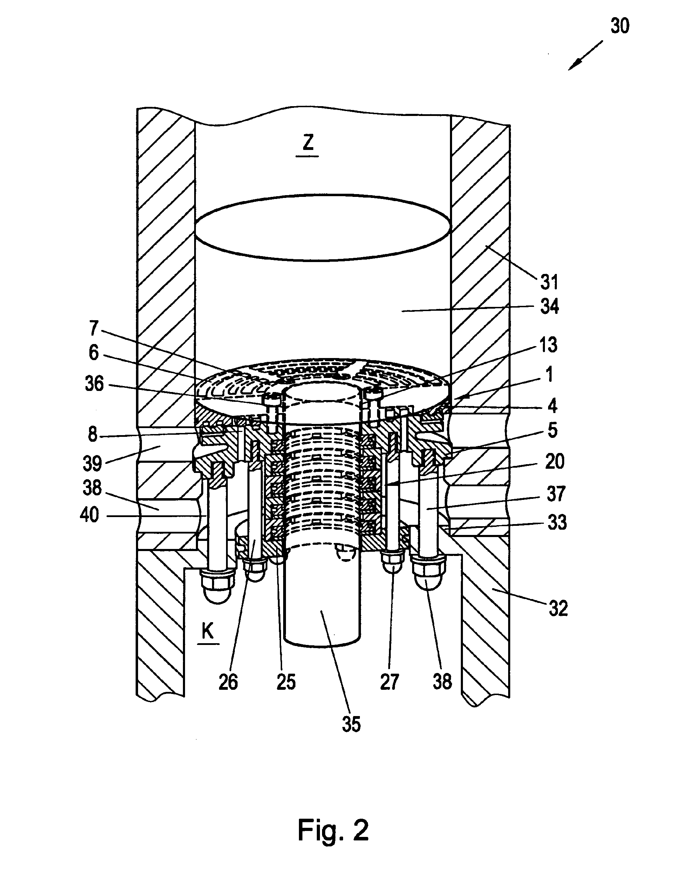

An den Ventilscheiben 4, 5 ist radial innen jeweils eine axial durchgehende Ausnehmung 13 vorgesehen, durch die im betriebsgemäßen Einsatz des Ventils eine Kolbenstange 35 durchgeführt ist (siehe Fig. 2). Zur Vermeidung von Berührung und damit von Verschleiß und Erzeugung von Reibung bzw. Reibungswärme zwischen Kolbenstange 35 und Ausnehmung 13 sollte die Ausnehmung 13 beabstandet von der äußeren Umfangsfläche der Kolbenstange 35 sein. Dadurch entsteht aber ein Umfangsspalt 36 zwischen Kolbenstange 35 und Ausnehmung 13, dessen Volumen Schadraum bildet. Es ist daher angestrebt, diesen Umfangsspalt 36 so klein wie möglich halten. Der radiale Abstand zur Kolbenstange 35 hin kann aber nicht so klein wie möglich gemacht werden, da die Kolbenstange 35 auch radialen Bewegungen (bzw. quer zur Hubbewegung) unterworfen ist.

Um den Umfangsspalt 36 zu minimieren, schließt die Abdichtung 20 der Kolbenstange 35 zum Kurbelgehäuse erfindungsgemäß axial an die zweite, dem Kurbelgehäuseraum K zugewandten Ventilscheibe 5 des Kompressorventils 1 an, um die axiale Länge des Umfangsspaltes 36 so gering wie möglich zu halten. Diese Abdichtung 20 umfasst in der Regel eine Anzahl von axial hintereinander angeordneten Druckpackungen 21, z.B. in bekannter Weise gebildet aus radial und/oder tangential geschnittenen oder segmentierten Packungsringen 22 eventuell in Kombination mit Stützringen, die in einer Kammerscheibe 23 angeordnet sind. Die Abdichtung 20 könnte, an einer Stirnseite oder beidseitig, auch noch einen axialen Abschluss, z.B. in Form einer ringförmigen Scheibe, aufweisen. Solche Abdichtungen 20 einer Kolbenstange 35 sind hinlänglich bekannt und es wird in Folge hier nicht weiter darauf eingegangen.

Bevorzugt wird die Abdichtung 20 so nahe wie möglich am zylinderseitigen axialen Ende des Kompressorventils 1 angeordnet, da das die radiale Länge des Umfangsspaltes 36 weiter verringert. Dazu ist hier vorgesehen, zumindest eine erste Druckpackung 21 a in der zweiten Ventilscheibe 5 anzuordnen. Denkbar ist es auch weitere Druckpackungen 21 in der zweiten Ventilscheibe 5 anzuordnen. Für diese Druckpackung(en) 21 a kann auch auf eine Kammerscheibe 23 verzichtet werden, deren Funktion die zweite Ventilscheibe 5 übernehmen kann. Je näher diese erste Druckpackung 21 a am zylinderseitigen Ende des Kompressorventils 1 angeordnet wird, umso weiter kann die axiale Länge des Umfangsspaltes 36 verkürzt werden und umso kleiner wird damit der Schadraum.

Zur Befestigung der Abdichtung 20 am Kompressorventil 1 ist im gezeigten Ausführungsbeispiel eine Halteplatte 25 vorgesehen, durch die über den Umfang verteilte, in die zweite Ventilscheibe 5 geschraubte Bolzen 26 führen. Die Halteplatte 25 wird mittels Muttern 27 gegen die Abdichtung 20 gepresst, die damit am Kompressorventil 1 befestigt ist. Das Kompressorventil 1 kann somit vorab vollständig montiert werden und anschließend als ein Bauteil in den Zylinder eingesetzt werden, was die Montage erheblich vereinfacht. Aber auch eine nachträgliche Montage der Abdichtung 20 bzw. eine einfache Wartbarkeit der Abdichtung 20 wird damit ermöglicht.

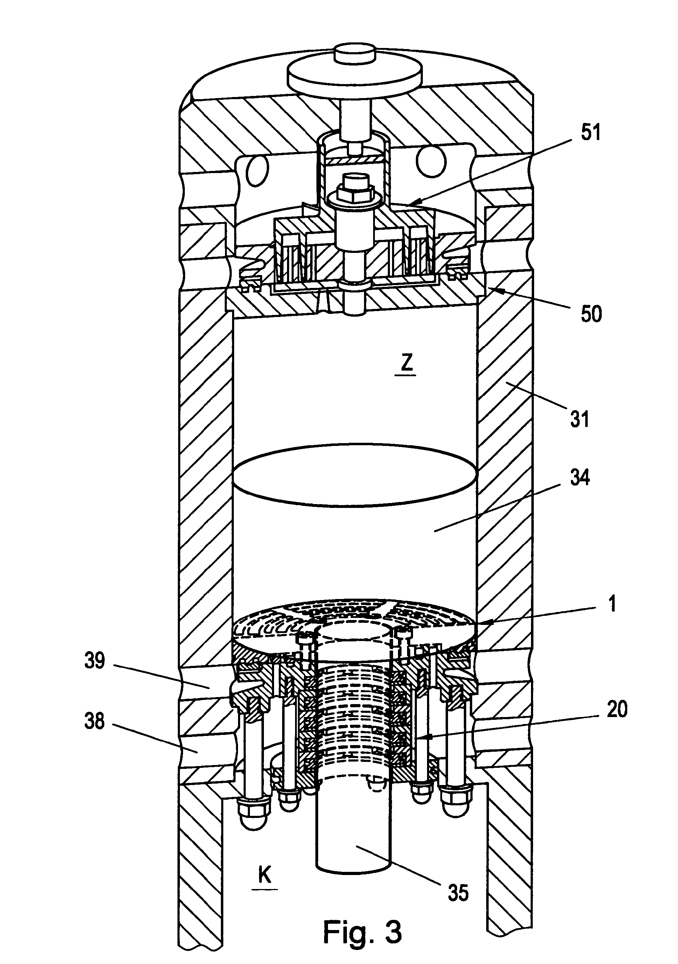

Die Figs. 2 und 3 zeigen das erfindungsgemäße Kompressorventil 1 im Einsatz in einem Zylinder 31 eines doppeltwirkenden Kompressors 30. In einem Zylinder 31 des Kompressors 30 wird ein Kolben 34, der mit einer Kolbenstange 35 verbunden ist hin- und herbewegt. Der Zylinder 31 könnte dabei auch als Laufbuchse ausgeführt sein. Das Kurbelgehäuse 32 ist durch eine Trennwand 33 vom Zylinder 31 getrennt. An dieser Trennwand 33 ist hier das erfindungsgemäße Kompressorventil 1 befestigt. Dazu führen durch die Trennwand 33 über den Umfang verteilt eine Anzahl von Bolzen 37 durch, die in das Kompressorventil 1, hier in die zweite Ventilscheibe 5, geschraubt sind. Das Kompressorventil 1 kann dann durch Muttern 38 an der Trennwand 33 befestigt werden. Die Halteplatte 25 kann dazu auch in einer Ausnehmung der Trennplatte 33 angeordnet sein, wobei an der Halteplatte 25 ein geeignetes Dichtelement, z.B. ein O-Ring, zur Trennplatte 33 vorgesehen sein kann.

Die Kolbenstange 35 ist durch die Ausnehmungen 13 des Kompressorventils 1 durchgeführt. Die Abdichtung 20 umgibt die Kolbenstange 35 und dichtet den Zylinderraum Z gegen den Kurbelgehäuseraum K ab.

In der Wand des Zylinders 31 sind Zuführöffnungen 38, über die Druckmedium, z.B. Luft, zum Saugventil 2 zugeführt wird, vorgesehen. Das zugeführte Druckmedium wird dabei zwischen zweiter Ventilscheibe 5 und Trennwand 33 geführt, wobei der dadurch gebildete Zuführraum 40 radial innen durch die Abdichtung 20 begrenzt wird. Weiters sind in der Wand des Zylinders 31 Abführöffnungen 39 vorgesehen, über die das komprimierte, durch das Druckventil 3 ausströmende Druckmedium abgeführt wird. Bevorzugt sind über den Umfang eine Mehrzahl von Zuführöffnungen 38 und/oder Abführöffnungen 39 vorgesehen.

Durch den Umstand, dass der Zuführraum 40 radial innen durch die Abdichtung 20 begrenzt ist, umströmt das kalte zugeführte Druckmedium die Abdichtung 20 und kühlt gleichzeitig die Abdichtung 20. Dadurch kann die Lebensdauer der Abdichtung 20 erhöht werden bzw. unterliegt die Abdichtung 20 geringeren thermischen Anforderungen und kann daher einfache rund günstiger ausgeführt sein.

Der Schadraum zwischen Kolben 34 und der ersten Ventilscheibe 4 kann weitgehend minimiert werden, indem der Kolben 34 an die Gestalt der dem Zylinderraum Z zugewandten axialen Stirnfläche, die bevorzugt eben ausgestaltet ist, der ersten Ventilscheibe 4 angepasst wird. Der Abstand zwischen erster Ventilscheibe 4 und Kolben 34 kann dabei soweit reduziert werden, dass im Betrieb kein Kontakt zwischen Kolben 34 und Kompressorventil 1 stattfindet.

Zylinderkopfseitig ist hier ebenfalls ein konzentrisches Saug- und Druckventil 50 angeordnet, das über einen Abhebegreifer 51 gesteuert werden kann. Auch am kurbelseitigen Kompressorventil 1 kann ein Abhebegreifer angeordnet werden, z.B. seitlich durch den Zylinder 31 durchragend, oder auch von unten durch den Kurbelgehäuseraum K.

Das erfindungsgemäße Kompressorventil 1 kann aber selbstverständlich auch in einem einfach wirkenden Kompressor eingesetzt werden, in welchem Fall das erfindungsgemäße Kompressorventil 1 das einzige Ventil am Zylinder wäre.

## Patentansprüche

1. Selbsttätiges Kompressorventil mit einem Saugventil (2) und einem Druckventil (3), die konzentrisch zueinander angeordnet sind, wobei das Saugventil (2) und das Druckventil (3) radial nebeneinander angeordnet sind und das Saugventil (2) und das Druckventil (3) aus einer ersten und einer zweiten Ventilscheibe (4, 5) gebildet ist, zwischen denen für das Saugventil (2) und das Druckventil (3) jeweils ein Dichtelement (10, 11) beweglich angeordnet ist, **dadurch gekennzeichnet, dass** in der ersten und zweiten Ventilscheibe (4, 5) eine axial durchgehende Ausnehmung (13) vorgesehen ist und eine Abdichtung (20) aus einer Anzahl von axial hintereinander angeordneten Druckpackungeh (21 a, 21) axial an der zweiten Ventilscheibe (5) anliegend angeordnet ist.

2. Selbsttätiges Kompressorventil nach Anspruch 1, **dadurch gekennzeichnet, dass** zumindest eine Druckpackung (21 a) in der zweiten Ventilscheibe (5) angeordnet ist.

3. Selbsttätiges Kompressorventil nach Anspruch 1 oder 2, **dadurch gekennzeichnet, dass** das Saugventil (2) radial innen angeordnet ist und ein Zuführraum (40) zur Zuführung von Druckmedium zum Saugventil (2) radial innen durch die Abdichtung (20) begrenzt ist.

4. Kompressor (30) mit einem Zylinder (31) und einem Kurbelgehäuse, wobei das Kurbelgehäuse vom Zylinder (31) durch eine Trennwand (33) getrennt ist und an der Trennwand (33) ein selbsttätiges Kompressorventil (1) nach einem der Ansprüche 1 bis 3 angeordnet ist und eine Kolbenstange (35) des Kompressors (30) durch die Ausnehmung (13) der ersten und zweiten Ventilscheibe (4, 5) durchgeführt ist und von der Abdichtung (20) zur Abdichtung zwischen Zylinderraum (Z) und Kurbelgehäuseraum (K) umgeben ist.

5. Kompressor nach Anspruch 4, **dadurch gekennzeichnet, dass** in der Wand des Zylinders (31) eine Anzahl von Zuführöffnungen (38) zur Zufuhr von Druckmedium und/oder eine Anzahl von Abführöffnungen (39) zur Abfuhr von Druckmedium angeordnet sind.

## Claims

1. An automatic compressor valve with a suction valve (2) and a pressure valve (3) which are arranged concentrically to one another, wherein the suction valve (2) and the pressure valve (3) are arranged radially adjacent to one another and the suction valve (2) and the pressure valve (3) are formed from a first and a second valve disk (4, 5) between which a sealing element (10, 11) is movably arranged for the suction valve (2) and the pressure valve (3), **characterized in that** in the first and the second valve disk (4, 5), an axially continuously open recess (13) is provided and that a sealing (20) consisting of a number of pressure packings (21 a, 21), which are arranged axially one behind the other, is arranged axially abutting on the second valve disk (5).

2. The automatic compressor valve according to claim 1, **characterized in that** at least one pressure packing (21 a) is arranged in the second valve disk (5).

3. The automatic compressor valve according to claim 1 or claim 2, **characterized in that** the suction valve (2) is arranged radially on the inside and a supply chamber (40) for supplying pressure medium to the suction valve (2) is bordered radially on the inside by the sealing (20).

4. A compressor (30) with a cylinder (31) and a crankcase, wherein the crankcase is separated from the cylinder (31) by a separating wall (33), and an automatic compressor valve (1) according to any one of the claims 1 to 3 is arranged on the separating wall (33), and a piston rod (35) of the compressor (30) is guided through the recess (13) of the first and second valve disk (4, 5) and is surrounded by the sealing (20) for sealing between cylinder space (Z) and crankcase (K).

5. The compressor according to claim 4, **characterized in that** in the wall of the cylinder (31), a number of supply openings (38) for supplying pressure medium and/or a number of discharge openings (39) for discharging pressure medium are arranged.

## Revendications

1. Soupape de compresseur automatique, comprenant une soupape d'aspiration (2) et une soupape de pression (3) qui sont disposées concentriquement l'une à l'autre, la soupape d'aspiration (2) et la soupape de pression (3) étant disposées l'une à côté de l'autre dans la direction radiale et la soupape d'aspiration (2) et la soupape de pression (3) étant formées d'un premier et d'un second plateau de soupape (4, 5) entre lesquels est disposé mobile un élément d'étanchéité (10, 11), l'un pour la soupape d'aspiration (2), l'autre pour la soupape de pression (3), **caractérisée par le fait que**, dans le premier et le second plateau de soupape (4,5) est formé un évidement (13) continu dans la direction axiale, et un joint (20) formé d'un nombre de garnitures compressées (21a, 21) disposées les unes à la suite des autres dans la direction axiale est disposé adjacent au second plateau de soupape (5).

2. Soupape de compresseur automatique selon la revendication 1, **caractérisée par le fait qu'**au moins une garniture compressée (21a) est disposée dans le second plateau de soupape (5).

3. Soupape de compresseur automatique selon l'une des revendications 1 ou 2, **caractérisée par le fait que** la soupape d'aspiration (2) est disposée radialement à l'intérieur et un espace d'acheminement (40) servant à acheminer un fluide sous pression à la soupape d'aspiration (2) est limité radialement à l'intérieur par le joint (20).

4. Compresseur (30) comprenant un cylindre (31) et un carter de vilebrequin, le carter de vilebrequin étant séparé du cylindre (31) par une cloison (33), une soupape de compresseur automatique (1) selon l'une des revendications 1 à 3 étant disposée sur la cloison (33), et une tige de piston (35) du compresseur (30) étant passée à travers l'évidement (13) du premier et du second plateau de soupape (4,5), et étant entourée par le joint (20) servant à établir l'étanchéité entre l'espace de cylindre (Z) et l'espace du carter de vilebrequin (K).

5. Compresseur selon la revendication 4, **caractérisé par le fait que**, dans la paroi du cylindre (31), sont formées un nombre d'ouvertures d'acheminement (38) servant pour l'acheminement d'un milieu de pression et/ou un nombre d'ouvertures d'évacuation (39) pour l'évacuation du milieu de pression.
